# EUROPEAN PATENT SPECIFICATION

(11) **EP 3 922 781 B1**
(45) Date of publication and mention of the grant of the patent: **26.06.2024**
(21) Application number: 21179122.3
(22) Date of filing: 11.06.2021
(51) Int. Cl.: E04B 7/16, E04D 3/08

(54) **A PANEL SYSTEM WITH AN INSTALLATION PROFILE HAVING ONE OR MORE BORDER SECTIONS, AND A METHOD OF ADAPTING SUCH A PANEL SYSTEM**
PLATTENSYSTEM MIT EINEM MONTAGEPROFIL MIT EINEM ODER MEHREREN RANDABSCHNITTEN UND VERFAHREN ZUR ANPASSUNG SOLCH EINES PLATTENSYSTEMS
SYSTÈME DE PANNEAUX AYANT UN PROFIL D'INSTALLATION COMPORTANT UNE OU PLUSIEURS SECTIONS DE BORDURE ET PROCÉDÉ D'ADAPTATION D'UN TEL SYSTÈME DE PANNEAUX

(30) Priority: 12.06.2020 DK PA202070382
(43) Date of publication of application: 15.12.2021
(73) Proprietor: VKR Holding A/S, 2970 Hørsholm (DK)
(72) Inventor: HANSEN, Birgitte, 2970 Hørsholm (DK); GRINVALDS, Carsten, 2970 Hørsholm (DK)
(74) Representative: AWA Denmark A/S

(56) References cited:
- WO-A1-00/65171
- GB-A- 2 204 627

## Description

### A panel system with an installation profile having one or more border sections, and a method of adapting such a panel system

### Technical Field

The present invention relates to a panel system comprising a number of fixed panels and a number of openable panels, each fixed panel and each openable panel comprising a frame structure composed of a set of profile elements encasing a panelling element, said frame structure including one top profile element configured to be connected to a supporting structure by means of a mounting and hinge assembly of said panel system. The invention furthermore relates to a method of adapting such a panel system.

### Background Art

Panel fillets comprising fixed or openable panels arranged in pitched or flat roofs may be provided in a number of varieties and often include complicated structures in order to allow opening of the sash and to fulfil other functions, such as ventilation, waterproofing and thermal insulation, while permitting cleaning of the outside of the pane from inside the building. The varieties include roof windows of the pivoting type, the hinge axis being either located at the centre or displaced from the centre of the window, and top-hung roof windows that pivot for cleaning by means of an intermediate frame. Furthermore, water and other precipitation may enter into the window structure and penetrate under the panel system. Heat losses may also occur between the different components of the panel system structure.

A panel system of the kind mentioned in the introduction is devised in Applicant's published international applications WO 00/65171 A1, WO 00/65172 A1 and WO 00/65173 A1.

While these solutions have proven to function well over the years, rooms for improvement exist in terms of flexibility in the design of the components and configuration of the panel system.

### Summary of Invention

With this background, it is therefore an object of the invention to provide a panel system, which is cost-effective to manufacture and in use.

In a first aspect, this and further objects are achieved with a panel system according to claim 1, i.e. a panel system of the kind mentioned in the introduction wherein the mounting and hinge assembly comprises an installation profile with a main body having a first, interior end and a second, exterior end, and wherein at least one border section is provided in connection with at least one of the first, interior end and the second, exterior end of the main body, wherein the installation profile comprises an extruded profile of a metallic material, and characterised in that the border section in connection with the second exterior, upper end of the main body is formed by an exchangeable, separate extension element of a thermal insulation material, which is connected to the main body.

Providing an installation profile, a facilitated installation has been attained. The installation profile is easy to connect to a supporting structure. Dividing the installation profile into the main body and the border section or border sections entails that a uniform main body may be utilised in a number of various installation profiles, whereas each border section may be tailored to the specific field of application of the panel system.

In order to obtain improved flexibility, the border section at the upper, exterior end of the main body is constituted by separate part.

The installation profile comprises an extruded profile of a metallic material.

A panel system according to the invention can be realised by adapting an installation profile, wherein at least one of the border sections of the installation profile is exchangeable for an extension element of a thermal insulation material. This makes it possible to adapt the installation profile to the intended installation configuration and environment. Thus, in panel systems intended to be installed in a warm climate, the entire installation profile may remain intact, whereas in panel systems to be installed in colder climates, the border section or border sections may be exchanged to improve the overall thermal insulating properties of the panel system and resulting into a panel system according to the invetion.

In an advantageous development of this preferred embodiment, forming a mechanically simple and reliable solution, the installation profile is provided with a top leg at the second, exterior end of the main body, the top leg extending away from the top profile element of each fixed panel and each openable panel, and wherein the top leg includes engagement means for engagement with a top extension element.

Advantageously, the top extension element comprises two snap fit legs for engagement with the top leg of the installation profile and a top extension element recess. Snap connections, whether providing a positive, form-fitting engagement or a non-positive, force-fitting engagement, are easily handled and reliable.

In a second aspect, a method of adapting a panel system so that it results into a panel system according to claim 1 is devised. This method comprises the steps of:
selecting desired thermal insulation properties of the panel system,
providing at least one extension element with suitable thermal insulation properties,
cutting off at least one border section from the main body, and
engaging the at least one extension element with the main body of the installation profile.

This makes it possible to adapt the installation profile in accordance with the desired properties.

Any advantages applying to the first aspect apply also to the second aspect and vice versa.

Further details and advantages will appear from the appended claims and the subsequent description and drawings.

### Brief Description of Drawings

The invention will be described in more detail below by means of non-limiting examples of embodiments and with reference to the schematic drawings, in which
Fig. 1 shows a general schematic perspective view a panel system according to the invention;
Fig. 2 is a sectional view of a top portion of a first embodiment of the panel system, with a two-layer insulating glazing unit (IGU), in a pitched configuration;
Fig. 3 is a sectional view of a bottom portion of an embodiment of the panel system, with a two-layer IGU, and with a vertical wall as substructure;
Fig. 4 is a sectional view of a bottom portion of an embodiment of the panel system, with a two-layer IGU, and built into a roof surface as substructure;
Fig. 5 is a sectional view of a top portion of an embodiment of the panel system, with a two-layer IGU, and built into a roof surface as substructure;
Fig. 6 is a sectional view of a transition portion of an embodiment of the panel system including two stepped panels, each with a two-layer IGU, and with a beam as substructure;
Fig. 7 is a sectional view of a side portion of an embodiment of the panel system, with a two-layer IGU, and built into a roof surface as substructure;
Fig. 8 is a sectional view of two neighbouring panels in an embodiment of the panel system, each with a two-layer IGU;
Fig. 9 is a sectional view of two neighbouring panels in an alternative embodiment of the panel system, each with a three-layer IGU;
Fig. 10 a sectional view of a profile element of a panel in an embodiment of the panel system according to the invention;
Figs 11 to 14 are sectional views of details in an embodiment of the panel system according to the invention;
Fig. 15 is a sectional view of bottom and top portions of a panel in an embodiment of the panel system according to the invention, indicating the flow of water or other precipitation;
Fig. 16 is a view corresponding to Fig. 2, but with a three-layer insulating glazing unit (IGU);
Fig. 17 is a view corresponding to Fig. 6, but with a three-layer insulating glazing unit (IGU) and with a shading;
Fig. 18 is a partial view, on a larger scale, of the details of Fig. 16;
Fig. 19a is a schematic sectional view of an alternative embodiment of an installation profile;
Fig. 19b is a schematic sectional view of an installation profile, which can be adapted to realise a panel system according to the invention;
Figs 20 to 23 are schematic sectional side views of steps during manufacture of a panel of a panel system in an embodiment of the invention;
Fig. 24 is a perspective partial view of an embodiment of the panel system according to the invention;
Fig. 25 is a partial perspective view of a lower portion of a panel of a panel system in an embodiment of the invention; and
Fig. 26 is an exploded partial perspective view of a lower portion of a panel of a panel system in an embodiment of the invention.

### Description of Embodiments

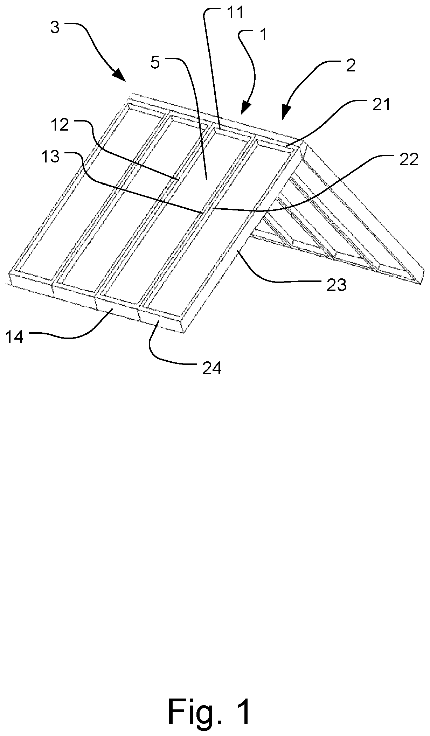

### Fig. 1 - General configuration of panel system

Referring initially to Fig. 1, embodiments of a panel system 3 will be described in further detail.

The panel system 3 can for instance be designed to form part of a panel fillet or another major panel surface which in the shown embodiment constitutes at least one part of a glass roof.

The panel system 3 comprises a number of fixed panels 1 and one or more openable panels 2. Each fixed panel 1 and each openable panel 2 comprises usually an orthogonal, or square, frame structure forming an essentially rectangular frame structure composed of a set of profile elements. In the embodiments shown, four profile elements are provided, namely a top profile element 11, two side profile elements 12, 13 and a bottom profile element 14 of the fixed panel 1 and correspondingly a top profile element 21, two side profile elements 22 and a bottom profile element 24 for the openable panel 2. The openable panel 2 is at its top element 21 hingedly connected to a supporting structure in a manner to be described in further detail below.

The panel system 3 may, at most, comprise as many openable panels 2 as fixed panels 1 or may comprise fewer openable panels 2 than fixed panels 1.

Each fixed panel 1 and each openable panel 2 comprises a panelling element 5. In the embodiments shown, the panelling element 5 comprises an insulating glazing unit, or IGU.

In alternative embodiments, the panelling element 5 may comprise or be replaced by any of a photovoltaic element e.g. solar cells, a blinded element, an IGU with built-in shading e.g. venetian blind, a panelling element filled with aerogel and/or a combination of these.

The panels 1, 2 of the panel system 3 can be used for many other different geometrical constructions and thus have another shape than the shown rectangle, e.g. a triangular or another polygonal shape. The hinged connection can further be provided at the bottom element or one of its side elements. The panels 1, 2 can be used for construction of various installation configurations, comprising e.g. double pitch rooflights, single pitch rooflights, stepped rooflights, and pyramids.

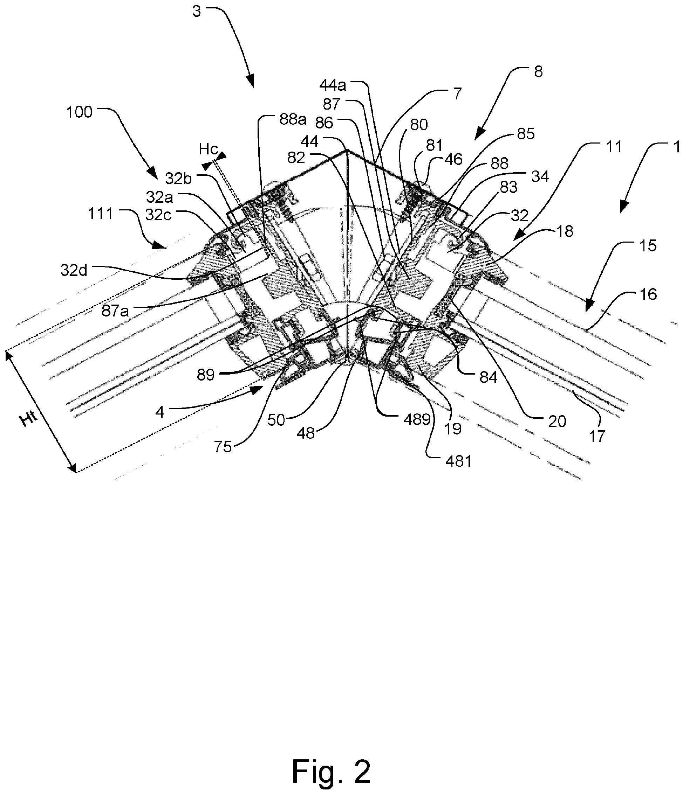

### Figs 2 to 8 - First embodiment: Structure of panels in two-layer IGU, and various installation configurations

The principles of the structure of the profile elements will now be described with reference to a first embodiment. It is noted that the structure of the described profile element could in principle apply to any one of the top profile element 11, the two side profile elements 12, 13 and the bottom profile element 14 of the fixed panel 1, and of the top profile element 21, the two side profile elements 22, 23 and the bottom profile element 24 for the openable panel 2.

The description of the top profile element 11 will be made with reference to the cross-sectional view shown in Fig. 2 of the fixed panel 1 and a second fixed panel 100, positioned oppositely to the fixed panel 1. The fixed panel 1 and the second fixed panel 100 may form part of a panel system 3 as shown in Fig. 1, in a first installation configuration, i.e. each comprising neighbouring panels which may be openable panels, as the openable panel 2, or further fixed panels, to form a double pitch rooflight comprising two rows of panels connected at the top portion of the panel system 3, e.g. forming a ridge. In this installation configuration, the panel system 3 is self-supporting since opposing panels abut each other to form a stable construction.

Furthermore, a drainage assembly 4 is indicated in Fig. 2, the structure of which will be described in more detail further on.

The panel system 3 is mounted to a supporting structure, which may in principle be constituted by any suitable means designed in accordance with the desired installation configuration.

In the installation configuration shown in Fig. 1, and also in Fig. 2, opposing panels support each other at the top profile elements 11, 21 of the respective panels 1, 2 as mentioned in the above.

In general, the top profile element 11, 21 of each panel 1, 2 is connected to a supporting structure by means of a mounting and hinge assembly including an installation profile 8 to be described in further detail below.

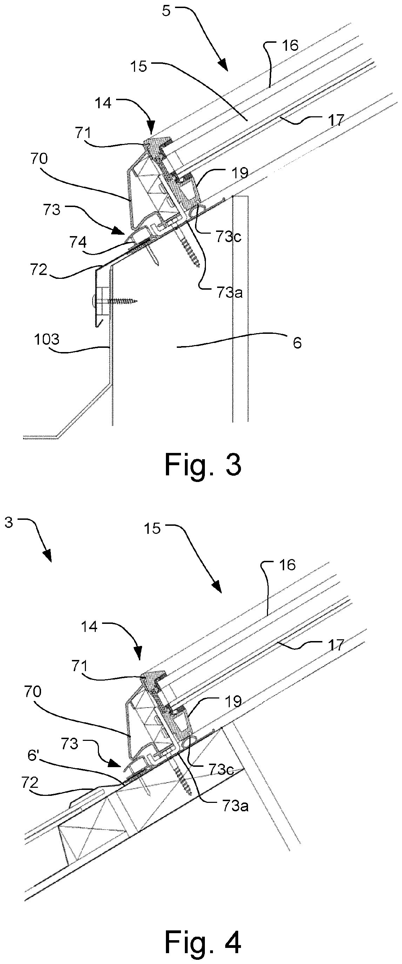

In Fig. 3, the bottom portion of the panel system 3 is shown in connection with a supporting structure in the form of a vertical wall 6, which corresponds to the first configuration shown in Fig. 1 and in Fig. 2. In Fig. 3, the bottom profile element 14 of the fixed panel 1 is thus shown.

In the below description of alternative installation configurations, reference to the panel system will be made by reference numeral 3, and the components of the panel system 3 will be referred to as in the above, first installation configuration for reasons of simplicity.

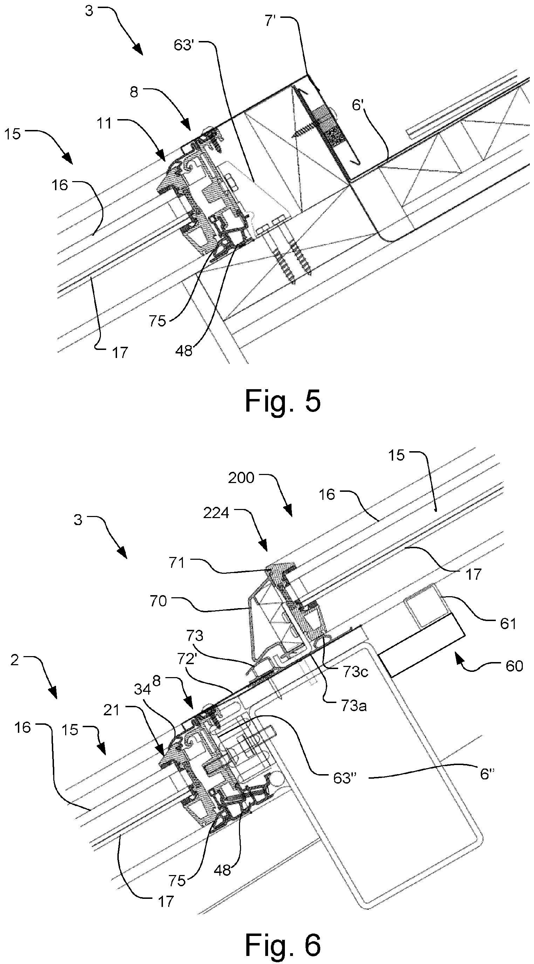

An alternative, second installation configuration is shown in Fig. 4, in which the bottom portion of the panel system 3 is built into a supporting structure in the form of a roof surface 6'. Correspondingly, the top portion of this other panel system is shown in Fig. 5, also with the roof surface 6'. The top profile element 11 of the fixed panel 1 is connected to the roof surface 6' by means of the mounting and hinge assembly including the installation profile 8 which is fastened to a fitting 63'. A top end flashing 7' is shown in Fig. 5.

In a further alternative, third installation configuration shown in Fig. 6, the panel system 3 comprises two panels installed in extension of each other in the direction of inclination of a pitched surface of the panel system. Here, the first openable panel 2 is shown in a stepped configuration relative to a second openable panel 200. The top profile element 21 of the first openable panel 2, and a bottom profile element 224 of the second openable panel 200 are connected to a supporting structure comprising a beam 6".

Also indicated in Fig. 6 is that the second openable panel 200 can be opened by mechanical means such as an actuator 60. The actuator 60 can be a chain actuator, a spindle actuator, a locking actuator, or a louvre actuator and may be powered by a DC motor. The openable panels 2, 200 can also be opened and closed by manual means such as an operating handle, or winding gear. Alternatively, the openable panels 2, 200 may be actuated by electromechanical means such as a switch, remote control, or at least one sensor measuring e.g. pollution, the temperature, or an air component such as humidity, or CO₂, on the interior and/or the exterior of the openable panels 2, 200. The actuator 60 is connected to a cross-bar 61, placed beneath the openable panel 200 for transferring force onto the openable panel 200 to be lifted. The cross-bar 61 extends between the two side profile elements (not shown, corresponding to side profile elements 22, 23 of the openable panel 2) of the second openable panel 200 and acts as a yoke distributing the load from the actuator 60 and operating element such as a chain (not shown). The actuator 60 is connected to the beam 6" providing the supporting structure to withstand the thrust from the actuator 60.

The beam 66" also constitutes the supporting structure of the top portion of the first openable panel 2, as the top profile element 21 is connected to a fitting 63" by means of the mounting and hinge assembly including the installation profile 8.

The installation configuration at the top portion of the second openable panel 200 may for instance be formed as in Fig. 2 or Fig. 5. The bottom portion of the first openable panel 2 may for instance be formed as in Fig. 3 or Fig. 4.

It is noted that terms such as outer, inner etc. should be interpreted in the following manner: The outer direction points away from the interior of the building, while the inner direction points towards the interior of the building. The terms interior and exterior are used hereafter to define whether an element is positioned inside or outside a structure, respectively, including directions towards the inside and the outside, respectively.

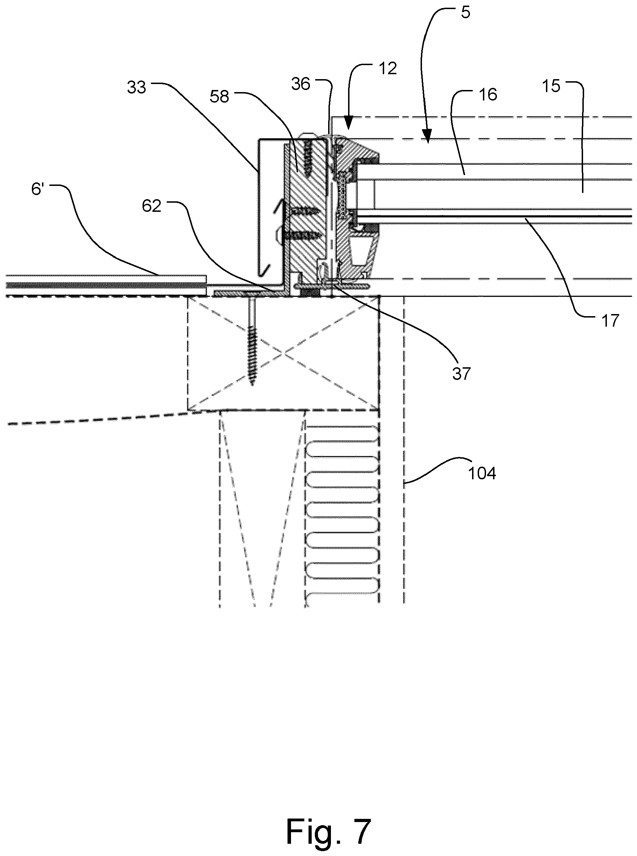

In Fig. 7, a fourth installation configuration is shown, in which the lefthand side portion of the panel system 3 is shown connected to a supporting structure comprising roof surface 6'. A mounting bracket 62 is shown, connecting the side profile element 12 of the fixed panel 1 to the roof surface 6'. Furthermore, a cover at the side in the form of a side cover 33 is provided.

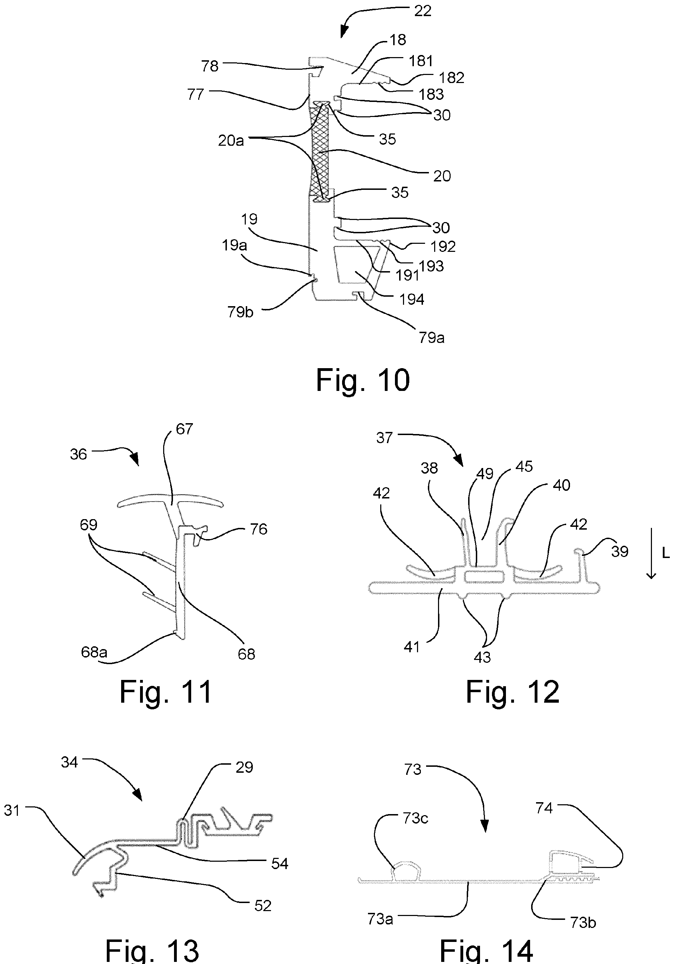

In the embodiments shown, and as appears from Figs. 2 to 8, the profile elements 21, 22, 23, 24 of the openable panel 2 are constructed in substantially the same way as the profile elements 11, 12, 13, 14 of the fixed panel 1. Correspondingly, it applies that the general design of the profile elements is the same for the top, bottom and side profile elements of both fixed and openable panels, whereas the choice of material composition and design of the workable material can be varied from profile element to profile element as the side profile elements in a rectangular structure will, however, be designed in a mutually alike way. The panelling element 5 is here formed by a two-layer IGU (insulating glazing unit) 15 comprising an interior pane sheet 17 facing downwards towards an interior of a building in the shown installed position of the panel system and an exposed exterior pane sheet 16 facing in the opposite direction towards the exterior. As shown most clearly in Fig. 10, each profile element, here with reference to side profile element 22 of the openable panel 2, comprises, in the shown embodiment, a profile member 10 of extruded aluminium or another rigid material such as pultruded fibreglass encapsulated in PUR or epoxy. In turn, the profile member 10 comprises a cover portion 18 and a support portion 19. The cover portion 18 comprises an abutment surface 181 to abut on an exterior side of the exterior pane sheet 16. Towards a pointed end 182 of the abutment surface 181, the abutment surface 181 is provided with indentations 183. The support portion 19 comprises an abutment surface 191 to abut on an interior side of the interior pane sheet 17. Towards an end 192, the abutments surface 191 is provided with indentations 193. The support portion 19 furthermore comprises a hollow 194. The indentations 183, 193 increases the surface area of the respective abutment surface 181, 191 and as such improve the contact between a respective sealing strip 313, 314 in contact with the panelling element 5. It is preferable that the sealing strips 313, 314 has structural properties, i.e. that the contribute to the strength of the fixed panel 1 and openable panel 2.

The pointed end 182 of the cover portion 18 functions as a drip cap and guides water onto the panelling element 5, here the two-layer IGU 15 and three-layer IGU 15', respectively.

The side profile element 22 further comprises an insulating member 20, which comprises a thermal insulation material to reduce heat losses through the openable panel 2. The openable panel in an open position results in large heat losses, which are reduced through the profile element itself. The insulating member 20 is connected to the profile member 10, between the cover portion 18 and the support portion 19, and is positioned such that an edge of the IGU 15 is at least partially covered by the insulating member 20.

The insulating member 20 comprises polyurethane foam (PUR), which in addition to insulating thermally, also prevents condensation. PUR avoids the formation of condensation in the insulating member 20, on the interior surfaces of the profile elements and/or on the surfaces of the IGU 15. The insulation material may be a material which has a lower thermal conductivity compared to its environment, whereby the insulation material reduces heat transfer between the surroundings of the insulation material. The provision of the insulating member comprising insulation material may thus significantly or substantially reduce heat transfer through the panel to or from the environment of the panel system.

Other typical insulation materials used in building construction and/or for manufacturing skylights, roof windows or panels are fiberglass, mineral wool, cellulose, natural fibres, foamed or expanded plastic polymers, polystyrene, such as expanded polystyrene (EPS), polyisocyanurate, polyurethane, vermiculite and perlite, urea-formaldehyde foam, cementitious foam and phenolic foam.

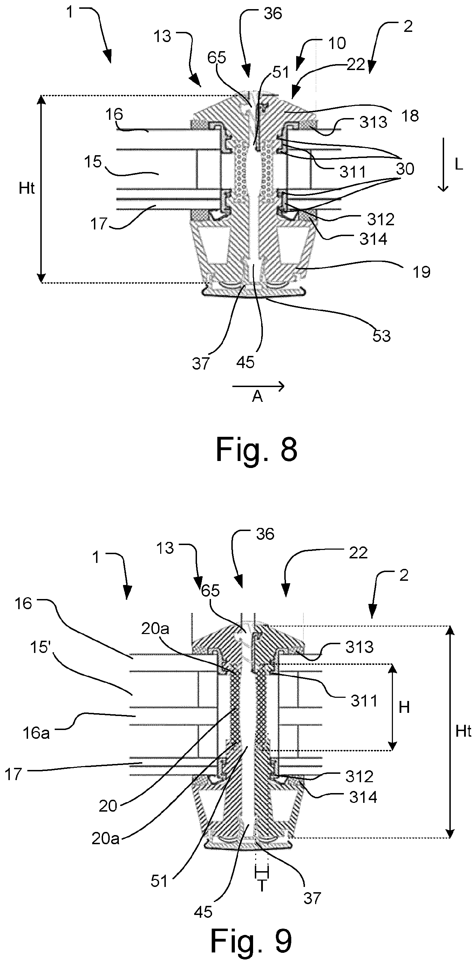

In the side profile element 22, a plurality of gasket tracks 30 are provided for reception of gaskets 311, 312 for sealing an edge portion of the IGU 15. Further tracks are provided as well, as will be described in more detail in the below Fig. 9 showing a second embodiment of the panel system 3 and to Figs 10 to 15 describing the drainage assembly 4 in more detail.

It is to be understood that the profile elements 11, 12, 13, 14 and 21, 22, 23, 24 can be designed integrally and comprise other materials, e. g. wood.

Finally, a connecting element 50 is present at an interior transition between the opposing fixed panel 1 and fixed panel 100.

### Fig. 9 - Second embodiment: Structure of panels in three-layer IGU

Fig. 9 shows a second embodiment of the panel system 3, in a view corresponding to Fig. 8 of the first embodiment. The panel system 3 of the second embodiment also comprises one or more fixed panels and one or more openable panels, of which neighbouring fixed panel 1 and openable panel 2 are shown. In this second embodiment, the panelling element 5 comprises a three-layer IGU 15', with three glass pane sheets, such that the three-layer IGU 15' further comprises an intermediate pane sheet 16a in addition to the exterior pane sheet 16 and the interior pane sheet 17.

As shown in Figs 8 and 9, the insulating member 20 is an elongated element, comprising projections 20a at both ends. The insulating member 20 has a thickness T, extending in an axial direction A, which is parallel to a plane of the surfaces of the IGU 15, namely the exterior pane sheet 16 and interior pane sheet 17. The insulating member 20 has a height H extending in a longitudinal direction L of the insulating member 20. The longitudinal direction L is perpendicular to the axial direction A and to the roof surface. The thickness of the insulating member is approximately 20% of the height H of the insulating member 20 in the first embodiment shown in Fig. 8 and approximately 12% in the second embodiment shown in Fig. 9. In general, the height H to length L ratio may be in the range 0.05 to 0.3, typically 0.1 to 0.2.

A total height Ht of the profile elements of the panel system 3 is indicated in Fig. 9. Comparing Fig. 9 with Fig. 8, it is seen that the profile member 10 has standard dimensions, which are the same in the first and in the second embodiments, and also throughout all profile elements 11, 12, 13, 14, 21, 22, 23, 24 in the set of profile elements of each of the fixed panel 1 and the openable panel 2. The height H of the insulating member 20 thus defines the total height Ht of the profile element dependent on the panelling element 5. That is, the three-layer IGU 15' of the second embodiment shown in Fig. 9 requires a taller insulating member 20, i.e. having a larger height H, than the two-layer IGU 15 of the first embodiment shown in Fig. 8. Correspondingly, in case another panelling element 5 of alternative dimensions is chosen, other dimensions of the insulating member 20 are chosen in dependence herewith.

As also shown more clearly in the below Fig. 10, the profile member 10 of the profile element 22 comprises tracks 35 to safely receive and hold the insulating member 20 in the projections 20a. The tracks 35 are dovetail-formed. A glazing bead is formed in conjunction with the gasket 312. The projections 20a of the insulating member 20 are formed with a T-shape. The projections 20a of the profile element 22 and the tracks 35 act as a tongue and groove mechanism. In the embodiment shown, the tracks 35 are placed in the cover portion 18 and the support portion 19, respectively, of the profile member 10 of the profile element 22.

The gap between the neighbouring side profile elements 13 and 22 is about 4 mm in the first embodiment of Fig. 8 and about 6 mm in the second embodiment of Fig. 9. The width of the side profile elements 13 and 22 in the axial direction of the panel system 3, from one visible edge of the IGU 15 and 15', respectively, to the other is about 50 mm in the first embodiment of Fig. 8 and about 52 mm in the second embodiment of Fig. 9. The total height Ht of the side profile elements 13 and 22 is about 74 mm in the first embodiment of Fig. 8, and the total height Ht is about 98 mm in the second embodiment of Fig. 9.

Also shown in Fig. 10, each profile element, here side profile element 22, is provided with a side profile track 79a and a wall profile track 79b for reception of a drainage list profile 37. In the embodiments shown, with a two-part profile member 10 of each profile element, the side profile track 79a and the wall profile track 79b are located in the support portion 19. Above and adjacent to the profile track 79b there is a small dripping nose 19a designed in a way to securely make a controlled delivery of water droplets to the under lying trench 45. The drainage list 37 is fastened to the fixed panel 1 such that the neighbouring openable panel 2 may open. The drainage profile 37 has at least one projecting part configured for projecting into the interspace 51 in a mounted condition as will be described in the following.

As shown in Fig. 12, the drainage list profile 37 shown in a cross-sectional view further carries an internal sealant strip, which has a secondary sealing lip 42 and which in a U-shaped portion 49 delimits a drain trench 45 the function of which will described below. The secondary sealing lip 42 extends along the width of the drain trench 45 forming projections to abut to a lower part of the profile element 22. The drainage list profile 37 further comprises a primary mounting sealing lip 39, which is leg shaped extending in the longitudinal direction L and is inserted into the side profile track 79a. The U-shaped portion 49 of the drainage list profile 37 includes a first sealing lip 38 and a second mounting sealing lip 40, which is inserted into the wall profile track 79b. The drainage list profile 37 further comprises a base part 41 which acts as a bottom flashing and comprises two rounded projections 43 that are shaped as semi-circles. The base part 41 comprises at least two plate sections, which extend away from the projecting part. In the mounted state the base part 41 is covered by a design list 53 as shown in Fig. 8 and 9, which is a strip that is bent in its two ends so that it may cover the entire base part 41. The design list 53 has an overall slight curvature. The rounded projections 43 provide for support, clearance to the base part 41 and pre-biasing of the design list 53 to avoid formation of wrinkles of the design list 53.

In general, also in the second embodiment of the panel system 3, the top profile element 11, 21 of each panel 1, 2 is connected to a supporting structure by means of a mounting and hinge assembly including an installation profile 9 to be described in further detail below.

Finally, a connecting element 50' is present at an interior transition between the opposing fixed panel 1 and fixed panel 100.

### Figs 10 to 15 - Drainage assembly and gaskets

In the following, the drainage of water from the panel system will be described, mainly with reference to the first and second embodiments shown in Figs 2 to 8 and 9, respectively, and to Figs 10 to 16.

As the panel system 3 is mounted in a pitched roof, surface water stemming from rain, snow or other precipitation is usually transported towards the bottom profile elements. The major part of this surface water will, of course, run over the panels system 3, but a smaller part may enter into the space between adjacent side profile elements 13, 22 and will end up in the drain trench 45 formed by the drainage list profile 37 as seen in Fig. 8. The drainage assembly 4 has an outer sealing plane and an inner sealing plane as will be described in further detail below.

To reduce the amount of water entering the space between adjacent side profile elements 13, 22 an outer top gasket 36 is located at the upper part of two neighbouring panels 1, 2 as shown in Figs 8-9. The outer top gasket 36 is positioned inside an interspace 51 between the neighbouring panels 1, 2. The outer top gasket 36 has at least one projecting part configured for projecting into the interspace 51 in a mounted condition as will be described in the following.

As seen in Fig. 11, the outer top gasket 36 comprises a plate portion 67 and a leg portion 68. The leg portion 68 forms an angle with the plate portion 67. The leg portion 68 comprises two leg projections 69, which are substantially parallel to each other in an undeformed state of the gasket and form a positive angle with the leg portion 68. The leg portion 68 further comprises a hook-like projection 76 to be received in a top gasket track 78 on a wall surface 77 of the side profile element 22, which faces towards the interspace 51 in the mounted state. Opposite the plate portion 67 the leg portion 68 has a slightly arrow shaped peak 68a which has a function as a dripping nose making a controlled delivery of water droplets to the under lying trench 45. Said top gasket track 78 is best seen in Fig. 10 in the wall surface 77.

In the mounted state of the outer top gasket 36 the plate portion 67 overlaps the exterior surface of two neighbouring side profile elements 22, 13 and covers a top part of the interspace 51 between the side profile element 22 and a neighbouring element, here side profile element 13, thereby defining an outer sealing plane of the drainage assembly 4. The leg portion 68 abuts on the wall surface 77 of the side profile element 22. The leg projections 69 are adjacent to an inner surface of an opposite side profile element 13 of a neighbouring fixed panel 1, such that the leg projections 69 block water from passing down through the interspace 51. The interspace 51 together with the leg projections 69 thus constitute a second drain trench 65.

The outer top gasket 36 extends over the entire length of the panels 1, 2, such that the outer sealing plane is kept unbroken over the entire length down to and by the outer side of the panel system 3, and at its end preferably projects out onto an adjacent bottom drainage list profile (not shown).

Water that may penetrate past the outer top gasket 36, either because an openable panel 2 is open during periods with precipitation, or due to leaks in the outer top gasket 36 or condensation water or bilge water.

An outer top gasket 36 and a drainage list profile 37 corresponding to those described above is also provided at the side edges of the panel system 3 as seen in Fig. 7, where they delimit an interspace between the side profile element 12 and an auxiliary rafter 58 provide at the end of the panel system. Any water from the outside which passes over the surface of the side profile element 12 and past the outer top gasket 36, drips down into the drain trench 45 in the U-shaped portion 49 of the drainage list profile 37. The drain trench 45 thus prevents that water penetrates further in the structure past the drainage list profile 37 as also described above.

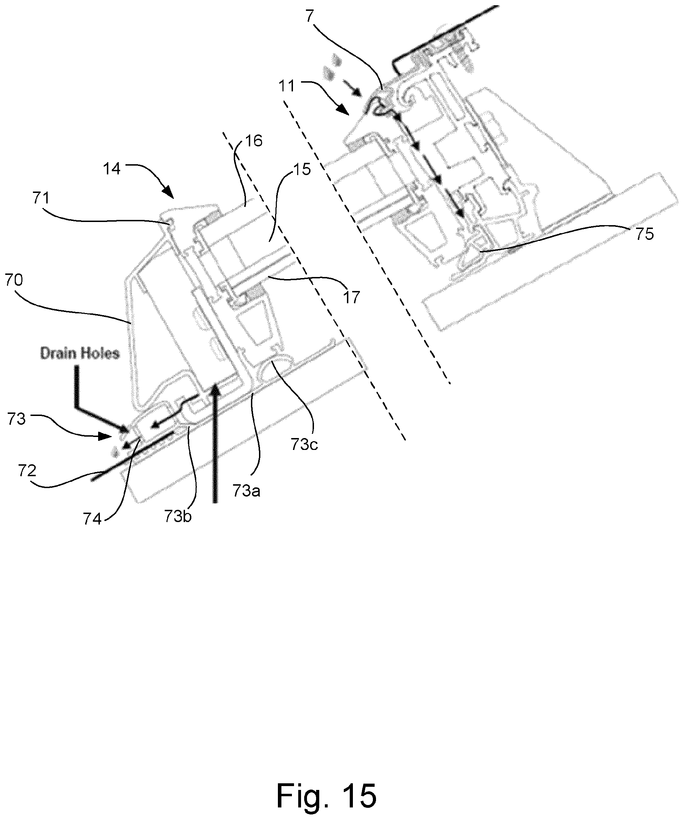

At the bottom end of the panel system 3, the surface water is led, as appears from Fig. 15, out on the roof surface and further to a not-shown roof gutter system via a cover shield 70, which is connected to the bottom profile element 14 by means of a sealant strip 71. The cover shield 70 may for example be made from aluminium. On the interior side an external sealant strip 73 serving as a bottom flashing gasket is provided. The external sealant strip 73 also acts as a sill gasket.

The water which reaches the drainage list profile 37 is led in the drain trench 45 along the length of U-shaped portion 49 as described in connection with Fig. 8, and as this extends over essentially the entire panel system 3 in the direction of the roof pitch, the water can be diverted at the end of the panel system 3, as shown in Fig. 15. Then, the water can be diverted further out past the external sealant strip 73 placed under the bottom profile element 14 via drain holes 74 the external sealant strip 73, which are mutually distanced in the axial direction A.

The inner sealing plane is thus defined by at least three gaskets, here provided on the drainage list profile 37 and the external sealant strip 73 arranged so that two of them abut on a lower part of two side profile elements 12, 13, 22, 23 and one is positioned under the bottom profile element 14, 24 when seen in a direction from the exterior towards the interior.

As is better seen in Fig. 14 the external sealant strip 73 comprises a projecting, split flange portion 73b, a base portion 73a and a support member 73c. The base portion 73a is a flat strip that is adjacent to the roof structure and is usually placed onto a supporting structure for e.g. roof tiles, the panel system 3 and/or flashing elements. The support member 73c is a sealing member that supports the lower part of the bottom profile element 14, while it blocks any condensation or other water coming from the interior side. The support member 73c is shaped as a semicircle and comprises an elastic material. The split flange portion 73b is connected to a bottom flashing 72, which is further connected to the roof surface. The bottom flashing 72 acts as a flashing element, covering a barrier sheet (not shown), so that humidity does not penetrate into the roof structure.

A similar configuration is found on the top profile element 11. The top flashing is connected to the upper part of the top profile element 11. The water is diverted out at the end of the system through an inner gasket 75. The inner gasket 75 is positioned at the upper end of the drain trench 45 when seen in the direction of the slope of the panel system 3 and is connected to the top profile element 11.

The gaskets 34, 36, 37, 75 may comprise ethylene-propylene diene monomer (EDPM) gasket known for its good resistance to water, sun and outdoor weather conditions. Each gasket is preferably made in one, for example by extrusion, but it is also possible to interconnect or co-extrude two or more gasket to form one of the gaskets described above, for example if different parts of a gasket is to be made from different materials.

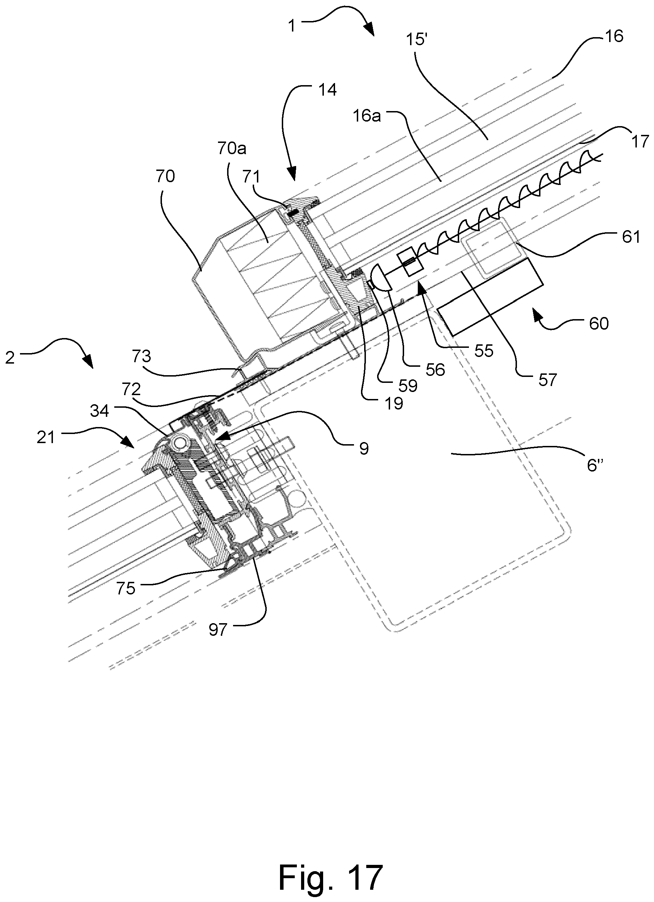

At joints between superimposed panels, such as the fixed panel 1 and the openable panel 2 in Fig 17, the sealant strip 71 acts as a drain element. Water led along the second drain trench 65 and the drain trench 45 is led down to the end of the superimposed panel system and onto the external sealant strip 73.

In the fixed panel 1 of Fig. 17, the profile element 14 is adjacent to an insulation foam member 70a, which is attached to the cover shield 70. The profile element 14 is mounted onto the roof via roof mounting brackets (not shown).

At the top profile element 21 of the openable panel 2 in Fig. 17 and at the top profile element 11 in Fig. 15, the water is diverted via a top flashing gasket 34. At the interior side of the profile element 21, the top profile element 21 abuts the inner gasket 75, which is connected to a bottom extension element 97 of the installation profile 9. The bottom extension element 97 will be described in detail further below.

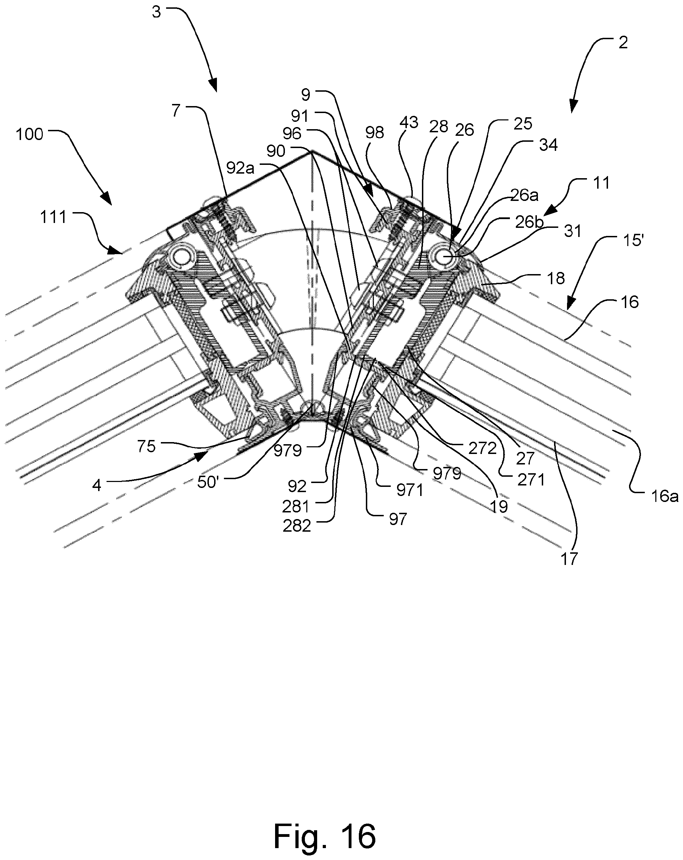

A first end of the top flashing gasket 34 exposed to the exterior overlaps a cover portion 18 of the top profile element 11, 21 and is rounded for leading water away from the top flashing gasket 34 towards the IGU 15 as may be seen in Fig. 15 as well as in another embodiment in Fig. 16. The top flashing gasket 34, which is better seen in Fig 13, comprises a first leg 52 extending towards the interior. The first leg 52 is placed in a track 78 in the cover portion 18 for making a sealing connection between the first leg 52 and the cover portion 18. The track may alternatively be a recess, perforation or the like. A second leg 54 of the top flashing gasket 34 extends away from the panel, parallel to the major surfaces of IGU 15, underneath a top flashing 7.

The top flashing 7 is situated above the installation profile 8. The top flashing 7 may extend from the top of the panels 1, 2, from a roof surface, or as seen in Fig. 6, from an upper panel towards a lower panel. In Fig. 2, the top flashing 7 has a bend on the middle of about 120 degrees. As seen in Fig. 2, the top flashing 7 may cover two installed fixed panels 1, 100 in the roof. The top flashing 7 is provided for protecting the components of the panel system 3 positioned beneath it by guiding precipitation onto the panels 1, 2, 100, 200 of the panel system 3.

A fastener 46 entering through the top flashing 7, through the second leg of the top flashing gasket 34 and through a top leg 81, 91 of the installation profile 8, 9 fastens the top flashing gasket 34 to the main body 80, 90 of the installation profile 8, 9. In Fig. 16, a third leg 31 of the top flashing gasket 34 extends towards the openable panel 2 to cover the components below.

Referring to Figs 16-17 as well as the detailed view of Fig. 11, the top flashing gasket 34, under the top flashing 7, has a bend 29 extending in a direction away from the interior for avoiding accumulation of water e.g. under the top flashing 7 or for avoiding water entering the components below.

### Figs 2 and 16-18 - Mounting and hinge assembly

The principles of the mounting of a panel 1, 2 of the panel system 3 in a supporting structure will now be described with particular reference to Fig. 2 showing the first embodiment, and to Fig. 16 showing the second embodiment.

It is noted that the principles of mounting are the same for the fixed panel 1 and the openable panel 2 in the panel system 3 in each respective panel system 3. The connection of the top profile element 11, 21 of the fixed panel 1 and the openable panel 2 to the supporting structure is carried out by means of a mounting and hinge assembly as mentioned in the above and which will be described in further detail below.

The structure of the mounting and hinge assemblies of the panel systems of the first embodiment and of the second embodiment are different, however.

Referring initially to Fig. 2, description of the mounting and hinge assembly of the first embodiment of the panel system 3 will be made with reference to the fixed panel 1.

The installation profile 8 of the fixed panel 1 of the panel system 3 of the first embodiment comprises a main body 80. At a first, interior end of the main body 80, a bottom leg 82 is provided to extend towards the top profile element 11 of the fixed panel 1. From the bottom leg 82, engagement means are provided for connection to a bottom extension element. In the embodiment shown, the engagement means comprise two interior legs 89 extending towards the interior and configured to be connected to the bottom extension element in the form of a bottom insulating profile 48 as shown. The two interior legs 89 are connected to the bottom insulating profile 48 through a hook-like portion 84 terminating at the most interior end of each interior leg 89. To that purpose, the bottom insulating profile 48 comprises two exterior legs 489 forming the counterpart engagement means to the interior legs 89 of the installation profile. Finally, the bottom insulating profile 48 comprises a gasket engagement flange 481 for the inner gasket 75.

At a second, exterior end of the main body 80 a top leg 81 extends away from the fixed panel 1, in the installation configuration shown in Fig. 2 towards the ridge of the panel system 3. The top leg 81 is parallel to the top flashing 7. The top leg 81 has a flashing engagement portion 85 for connecting with the top flashing gasket 34 and the top flashing 7. The connection between the top flashing 7, the top flashing gasket 34 and the flashing engagement portion 85 takes place by means of fastener 46.

At the second, exterior end of the main body 80, on a first side of the main body 80 facing towards the top profile element 11, the main body 80 is provided with a hook-shaped leg 83 extending towards the top profile element 11 of the fixed panel 1. The hook-shaped leg 83 of the installation profile 8 constitutes a first hinge part of the mounting and hinge assembly. The hook-shaped leg 83 is configured to be connected to a hook-shaped element 32 connected to the top profile element 11 of the fixed panel 1, such that the hook-shaped element 32 constitutes a second hinge part of the mounting and hinge assembly. The hook-shaped leg 83 and the hook-shaped element 32 together form a hinge which is the same irrespectively of the panel is openable or fixed. The hook-shaped element 32 comprises a base part 32a with a hook portion 32b. The base part 32a has a first end 32c connected to the top profile element 11 and a second opposite end 32d facing a wall 88a of the installation profile 8. There is a hinge clearance Hc, in the direction of inclination, between the second end 32d and the wall 88a for safe attachment between the hook-shaped leg 83 and the hook portion 32b, such that the openable panel cannot accidentally detach during opening. The hinge clearance Hc is approximately 13% of the total height Ht of the profile element in the embodiment shown in Fig. 2. In general, the hinge clearance He to total height Ht of the profile element ratio may be in the range 0.05 to 0.3, typically 0.1 to 0.2.

It is noted that in the embodiment shown, the hook-shaped leg 83 forms a curve towards the interior and terminates in an end facing the exterior, while the hook-shaped element 32 forms a curve towards the exterior and terminates in an end facing the interior. In this way, the fixed panel 1, and any openable panel 2 of the panel system 3, is installed by placing the panel perpendicular to the plane of the roof surface and engaging the hook-shaped element 32 with the hook-shaped leg 83 on the installation profile 8 of the mounting and hinge assembly, and rotating the panel into place to a closed position of the fixed panel 1 or the openable panel 2. The attachment of the hook-shaped element 32 to the hook-shaped leg 83 is thus without the use of fasteners such as bolts and can only be detached by reversing the process of mounting i.e. by rotating the panel into a position perpendicular to the roof surface. After attaching the hook-shaped element 32 to the hook-shaped leg 83, the fixed panel 1 remains in the closed position, while the openable panel 2 is connected to suitable operator means.

A second side of the main body 80 faces the opposite of the first side. The second side is configured for connecting the installation profile 8 to a supporting structure, for instance a roof surface as in the installation configuration of Fig. 5, a beam as in the installation configuration of Fig. 6, or here, to the second fixed panel 100. The connection to the second fixed panel 100 is provided by means of a support element 44. The installation profile 8 is connected to the support element 44 by means of a bolt 86 received in an enlarged portion 87 of the main body 80 of the installation profile 8 and introduced into a flange portion 44a of the support element 44. The first end 32c of the hook-shaped element 32 may be standing on the upper surface 87a of the enlarged portion 87 during attachment or detachment of a fixed panel 1 or an openable panel 2.

The second fixed panel 100 is a mirrored version of the first fixed panel 1 forming an obtuse angle with the fixed panel 1 as shown in Fig. 2.

Finally, the installation profile 8 of the fixed panel 1 of the panel system 3 of Fig. 2 has a hollow 88.

Although the description of the installation profile 8 has been made with reference to fixed panel 1, the structure of the mounting arrangement is the same for openable panel 2. This means that one and the same installation profile 8 may be provided to extend in an axial direction A of the panel system 3, throughout one or more panels of the panel system 3, including one or more fixed panels 1 and one or more openable panels 2. The length of the installation profile 8 depends on the installation configuration and also of the dimensions including weight of the panels. Typical maximum lengths of the installation profile 8 are 3 to 6 m.

Turning now initially to Fig. 16, corresponding to Fig. 2 showing the first embodiment, Fig. 16 depicts the mounting and hinge assembly including the installation profile 9 of the openable panel 2 of the second embodiment of the panel system 3, i.e. in which the panelling element 5 of Fig. 1 comprises a three-layer IGU 15'. The installation profile 9 of the fixed panel 1 and the openable panel 2 of the panel system 3 of the second embodiment comprises similar features.

The installation profile 9 extends in the axial direction A of the panel system 3. As in the first embodiment, the length of the installation profile 9 depends on the installation configuration of the dimensions including weight of the panels. Typical lengths range between the width of a single panel up to a maximum length of about 3 to 6 m.

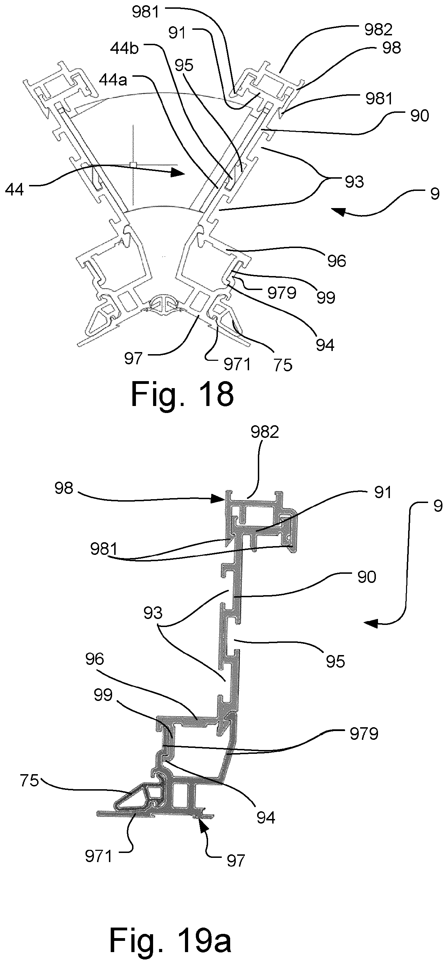

The mounting and hinge assembly including the installation profile 9 of the panel system 3 of the second embodiment is used in various installation configurations, including a stepped configuration as shown in Fig. 17, and also including various support structures as described for the first embodiment. The relationship between the installation profile 9 and the support structure in the installation configuration of Fig. 16 is shown in more detail in Fig. 18.

The installation profile 9 comprises a main body 90 provided with recesses for receiving means for connection and/or fastening to a support structure including neighbouring elements and to the fixed panel 1 and the openable panel 2 of the panel system 3. The top leg 91 of the installation profile 9 is positioned towards the second, exterior end of the main body 90 and a bottom leg 92 is positioned towards the first, interior end of the main body 90.

As seen most clearly in Fig. 18, a first side of the main body 90 of the installation profile 9, facing the openable panel 2, comprises two panel facing recesses 93. In the installation configuration shown in Fig. 16, the exterior panel facing recess of the two panel facing recesses 93 is fastened with a fastener to a hinge 25 to be described in further detail below and the interior recess is left unused.

Also shown in Figs 16 and 18, a second side of the main body 90 of the installation profile 9, facing the opposite, comprises an accommodation recess 95 configured to receive a support element leg 44b extending from the support element 44. The support element leg 44b forms an oblique angle relative to a major surface of the support element 44 such that the support element 44b hooks into the accommodation recess 95. In Fig. 16, the support element 44 is connected to the exterior side of the installation profile recess via fasteners 96 which may be in the form of bolts.

Furthermore, it is shown how the bottom leg 92 extends towards the top profile element 21, parallel to the major surfaces of the IGU 15'. The geometry of installation profile 9 facing the openable panel 2 is for making space for the hinge 25. Possibly, also other elements of the openable panel 2 may be accommodated at the side facing the openable panel 2.

The side of the installation profile 9 facing the openable panel 2 is configured for abutting a hinge profile flange 28 of said hinge 25 and an exterior surface of the bottom leg 92 is for abutting a profile flange leg 281 of said hinge 25. The bottom leg 92 comprises an interior leg 99 extending towards the interior and substantially parallel with the main body 90 of the installation profile 9. The interior leg 99 comprises a hook-like portion 94 for connecting to the bottom extension element 97. At the transition between the bottom leg 92 and the main body 90 of the installation profile 9, a cut-out 92a for receiving a mating end of the bottom extension element 97. The bottom extension element 97 includes exterior legs 979 and a gasket engagement flange 971.

At the exterior end of the installation profile 9, a top extension element 98 is connected to the top leg 91. On an interior facing side of the top extension element 98 abutting the top leg 91 of the installation profile 9, the top extension element 98 comprises two snap fit legs 981 for connecting to the top leg 91. On an exterior facing side of the top extension element 98, the top extension element 98 comprises a top extension element recess 982 for receiving the top flashing gasket 34 and fastener 43. As seen in Fig. 16, such fastener 43 is for entering from the exterior through the top flashing 7, through the top flashing gasket 34, the top extension element 98 and into and through the installation profile 9, to secure a tight and sealed installation of the installation profile 9 and top flashing 7 in the roof opening.

Referring again to Fig. 16, the hinge 25 is positioned between the openable panel 2 and the installation profile 9 for allowing the openable panel 2 to be rotated, around an axis of the hinge 25, between a closed position and an open position.

It is noted that fixed panels 1 as well as openable panels 2 of the panel system 3 in the second embodiment comprises such a hinge 25 regardless of the panel being openable or fixed. The hinge 25 also serves as a connection element between the installation profile 9 and the top profile element 11, 21 of each of the fixed panel 1 and openable panel 2.

The hinge 25 comprises a hinge journal part 26 designed as a bush or barrel mounting 26a meant for reception of a hinge pin 26b, said hinge pin 26b can form part of the openable panel, whereby the hinge pin defines a hinge axis, whereabout the openable panel structure may be rotated. The openable panel 2 may be rotated up to 100 degrees outwards from the closed position.

The hinge 25 has a hinge panel flange 27 connected to the openable panel 2. The hinge panel flange 27 is an elongated element, with a first flat side facing the top profile element 21 and a second side with a cut-out. The hinge panel flange 27 has means for fasteners (such as screws, not shown in detail) for being connected to the top profile element 21. Further, the hinge 25 has the hinge panel flange 28 for connecting with the installation profile 9. The hinge profile flange 28 is substantially a mirrored version of the hinge panel flange 27 and comprises means for being fastened to the installation profile 9. The hinge panel flange 27 and the hinge profile flange 28 face each other in a closed position of the openable panel 2 and are aligned such that the most interior surface of the flanges 27, 28 are substantially flush in the plane of the IGU 15'.

The hinge panel flange 27 has a panel flange leg 271 extending substantially perpendicular to a major surface of the hinge panel flange 27 towards the hinge profile flange 28. Likewise, the hinge profile flange 28 has the profile flange leg 281 extending substantially perpendicular to a major surface of the hinge profile flange 28 towards the hinge panel flange 27. The profile flange leg 281 is a mirrored version of the panel flange leg 271 and the two legs face each other in a closed position of the panel. The legs are cuboid or plate-shaped with a chamber on an outer edge. The legs are at the most interior edge of the flanges 27, 28.

The panel flange leg 271 is in proximity to the bottom leg 92 of the installation profile 9, extending in the plane of the IGU 15' beneath the hinge 25. An edge 272 of the panel flange leg 271 and an edge 282 of the profile flange leg 281 may be in abutment, in the closed position. The abutment between the edges 272, 282 can act as means for stopping the hinge 25 from over closing, which would damage the inner gasket 75 connected to the bottom extension element 97, when the openable panel 2 is rotated from an open position to a closed position. The edges 272, 282 can act as means for stopping, by the edge 272 of the panel flange leg 271 coming into contact with the edge 282 of the profile flange leg 281, as the panel is rotated towards the closed position, and thus, cause the movement of the panel to stop through friction and/or by increasing the resistance of the closing panel. This may protect the hinge 25 from damage, wear less on the hinge, and/or ensure a long-lasting hinge. Further, it may reduce the force needed for moving the hinge 25 from a closed position to an open position, and/or allow for more variance in the components of the hinge 25. The resistance may also provide the openable panel 2 with a soft close by decelerating the rotating window before reaching the closed position e.g. if at least one of the edges 272, 282 is made of a soft material such as silicone or rubber.

Referring particularly to Fig. 17, the openable panel 2 comprises a shading 55 on the interior side of the interior pane 17. The shading 55 has a first compressed state and a second extended state wherein it can shade for light from the outside and in or the opposite way. The shading 55 may also be able to have a third state between the first compressed state and the second extended state. The shading 55 is provided with a shading bracket 56 for attaching the shading 55 to the support portion 19 of the top profile element 21. The shading bracket 56 is provided with a connecting element 59 with a first end for connecting with the support portion 19 and a second end providing a flat surface for connecting with the shading bracket 56. The shading bracket 56 and the shading 55 are connected to the top profile element 21. The shading 55 may also be attached to a fixed panel 1. The shading 55, in an installed position, is above an interior profile element plane 57 closest to the interior, in the direction of the inclined roof structure. The compact shading 55 being above the most interior profile element plane 57 provides an almost hidden shade, that only overlaps a small portion of the IGU 15', in the compressed state, and thus, allows more light to flow in through the IGU 15'. The compact shading 55 allows easier packaging, easier installation, and other extension parts or to the like to abut the interior profile element plane 57 without influencing the function of the shade.

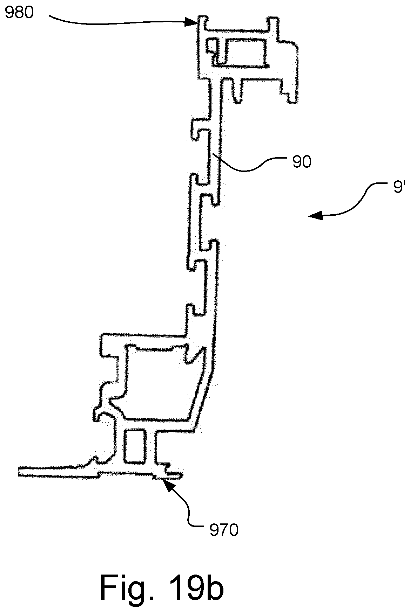

### Figs 19a and 19b - Flexible installation profile

In the above-described Fig. 18, the installation profile 9 is shown with top extension element 98 and bottom extension element 97 as separate elements connected to the main body 90 of the installation profile 9 as shown in Fig. 19a.

However, in an alternative embodiment it is also possible to provide the geometry of the top extension element 98 and bottom extension element 97 as border sections in connection with the main body 90. Such border sections can for instance be integral with the main body 90, such that the entire installation profile is able to be extruded of a metallic material or another material with the necessary properties such as pultruded fiberglass encapsulated in PUR, epoxy or a combination of these. The position of such integral border sections 970 and 980 in installation profile 9' is shown in Fig. 19b.

While such metallic material has good strength properties, the thermal performance is not necessarily satisfying. In some climates, increased insulation is desirable. By forming the border sections exchangeable for an extension element of a thermal insulation material, the insulating properties of the installation profile 9' and thus of the entire fixed panel 1 or openable panel 2 is improved.

In the embodiment of Fig. 19b, it is thus possible to utilise the installation profile 9' in the configuration indicated, i.e. where the border sections 970 and 980 are in place as integral parts of the installation profile 9' and carry out the functions of the bottom extension element 97 and top extension element 98 as described in the above, i.e. for receiving gaskets 75 and 34.

The installation profile 9' of Fig. 19b does not form part of the claimed invention. However, the installation profile 9' can be adapted to realise a panel system according to the invention, as described below.

In case it is desirable to improve the thermal insulation properties of the installation profile 9', the border sections 970 and/or 980 is/are cut off, for instance by milling, leaving the main body 90 in place, with a similar configuration as in Fig. 19a, including engagement means. Following the cutting off, a bottom extension element and/or a top extension element of suitable thermal insulation properties is/are connected to the main body 90 of the installation profile 9' via the engagement means. While such a bottom extension element or top extension element of improved thermal insulation properties are not shown in Fig. 19b, they correspond to the bottom extension element 97 and the top extension element 98 of Fig. 19a and thus perform similar functions as the counterparts of Fig. 19a.

Although not shown, a configuration of the installation profile 7 of the first embodiment with an integral border section to be possibly exchanged for bottom extension element 48 is conceivable as well.

In practice, the panel system 3 is adapted, for instance to particular climate regions, by the following steps:
selecting desired thermal insulation properties of the panel system 3,
providing at least one extension element 97, 98 with suitable thermal insulation properties,
cutting off at least one border section from the main body 90, and
engaging the at least one extension element 97, 98 with the main body 90 of the installation profile.

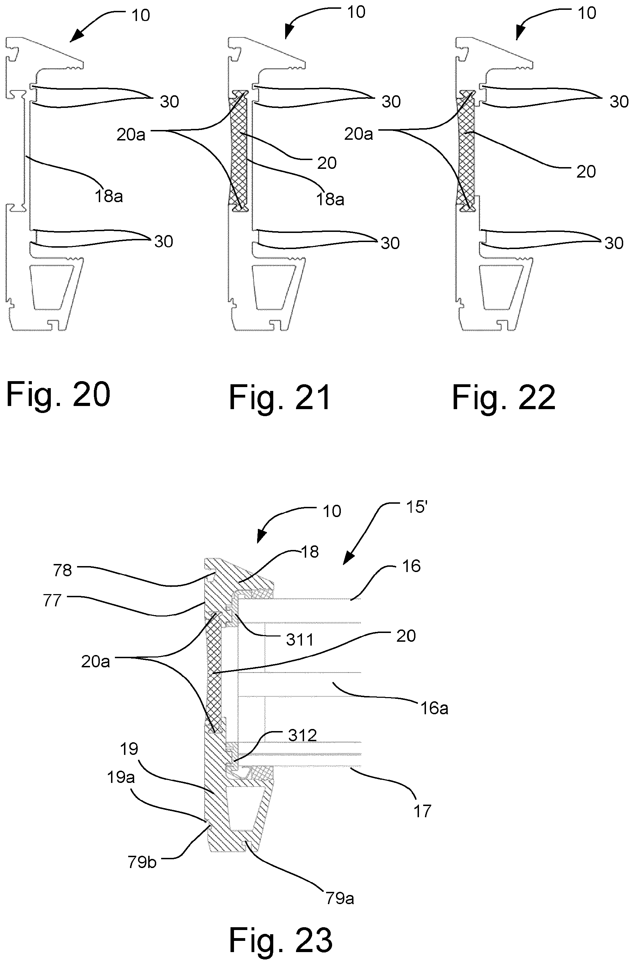

### Figs 20 to 23 - Method of manufacturing

Referring now to Figs 20 to 23, a method of manufacturing a panel of the panel system 3 as described in the above will be described. It is noted that the fixed panel 1 and the openable panel 2 are manufactured substantially in the same way.

The method of manufacturing a panel is carried out by the following fundamental steps:
(i) forming a profile member 10 of a rigid material,
(ii) forming an insulating member 20 of a thermal insulation material,
(iii) connecting the profile member 10 with the insulating member 20 to provide at least one profile length,
(iv) forming a set of profile elements 11, 12, 13, 14, 21, 22, 23, 24 from said at least one profile length,
(v) providing a panelling element 5; 15; 15', and
(vi) connecting the set of profile elements 11, 12, 13, 14, 21, 22, 23, 24 to form a frame structure encasing the panelling element 5; 15; 15' to form a finalised panel 1, 2.

The profile element is manufactured by extrusion of a rigid material. In the embodiment described, the material is metallic, typically aluminium, profile. According to this method, one large aluminium extrusion is used, i.e. step (i) of forming the profile member 10 comprises extruding an intermediate profile length comprising a bridging portion 18a connecting the support portion 19 with the cover portion 18 to form a generally U-shaped cavity delimited by the support portion 19, the bridging portion 18a and the cover portion 18 as shown in Fig. 20.

The generally U-shaped cavity in the middle is filled with a liquid plastic material, typically a liquid thermoset material, most commonly polyurethane (PUR), although molten free flowing thermoplastic materials such as hot melt adhesives may also be used. Thus, steps (ii) and (iii) of forming the insulating member 20 and connecting the profile member 10 with the insulating member 20 is carried out in a single operation by moulding the thermal insulation material into the U-shaped cavity delimited by the support portion 19, the bridging portion 18a and the cover portion 18. This is shown in Fig. 21.

After the liquid plastic material has solidified, usually bonding to the aluminium, the aluminium bottom of the U-shape is removed, as by milling or sawing (de-bridging), to yield the desired structural composite aluminium thermal barrier frame. In this way, a thermal bridge is created in the middle of the profile. Thus, the bridging portion 18a is de-bridged in an additional substep subsequent to step (iii) to attain the condition shown in Fig. 22.

It is also possible to use two separate aluminium profiles with the poured process by appropriate jigging and sealing the cavity bottom to eliminate the de-bridging operation. In either case, fewer operations are required to produce the finished thermal barrier profile than in the first process.

Alternatively, the profile element can further be produced in other ways and of other materials, e. g. by roll forming of a steel plate strip or pultrusion of a carbon fibre reinforced fibre glass profile.

According to this method, the insulating member 20 substantially comprises PUR. The composition of the PUR in a preferred embodiment is component A Sika Force 7744 L03 DGR (polyol) and component B Sika Force 7010 (isocyanate).

Additional indentations or holes are adapted for letting the PUR flow into in order to fixate the PUR to the aluminium profile avoiding any movements of the insulating PUR in relation to the aluminium profile.

The indentations are made to the bottom and/or top profile cavity projections using a cutter. Alternatively, holes may be drilled in the top and/or bottom of profile cavity wall.

A T-slot cutter may also be used to cut indentations in the top and bottom cavity projections. This method is especially attractive since, once filled and de-bridged, the composite profile looks standard without any potential cosmetic objections as there would be with the previous concepts.

The profile length attained in step (iii) may for instance have a length exceeding the length of at least one profile element of said set of profile elements 11, 12, 13, 14, 21, 22, 23, 24 of step (iv) by a factor of at least 2. One suitable length is about 6 m, which is advantageous from a manufacturing, storage and economical point of view. In some panels, step (iv) of forming said set of profile elements 11, 12, 13, 14, 21, 22, 23, 24 may carried out from a single profile length. Typically, however, more than one profile length is required.

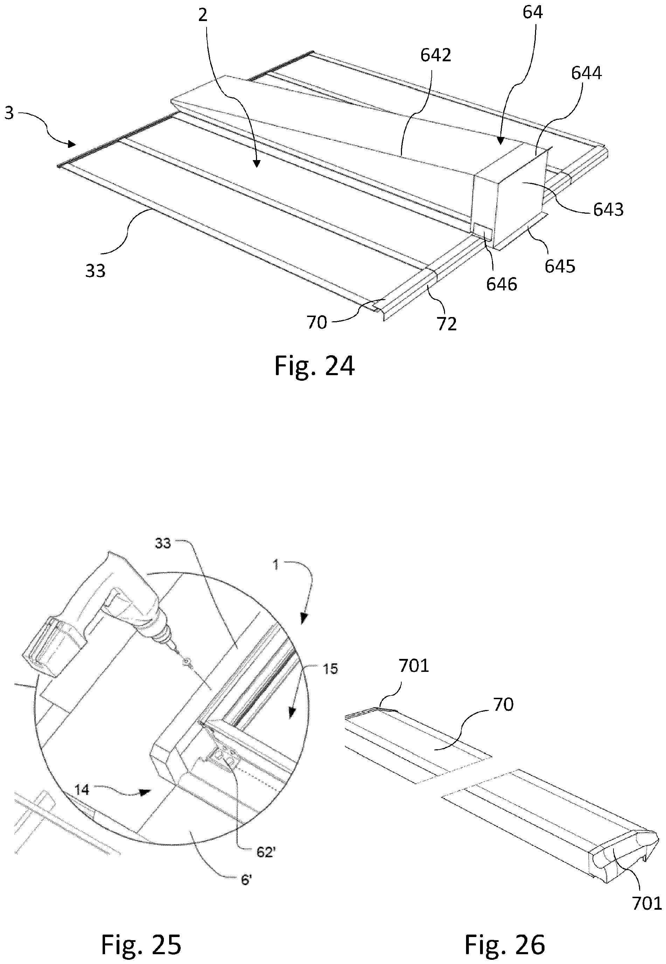

### Fig. 24 - Wind deflector

In the embodiment of the panel system 3 shown in Fig. 24, a number of panels 1, 2 are built in side by side. Adjacent to one openable panel 2, a wind deflector 64 is installed. The wind deflector 64 is formed as an element with two triangular opposing sides 641, a rectangular top 642 and a rectangular bottom end side 643, such that the upper end is substantially smaller than the lower end when seen in the direction of inclination of the panels. In this embodiment the wind deflector does not extend all the way to the top of the panel system, but it could be the case. The wind deflector 64 redirects wind blowing across the exterior surface of the panel system 3 near the openable panel 2 and changes the flow pattern, such that an outward flow of air and gases from the interior may escape, thus allowing the openable panel 2 of the panel system 3 to function as a smoke exit.

In this embodiment the wind deflector is further provided with flanges 644, 645, 646 at the bottom end. One flange 644 projects from the upper edge of the bottom end side 643 and serves wind deflection purposes. The second flange 645 projects over a bottom flashing 72 and may serve draining purposes as well as wind deflection purposes. The third flange 646 projects over the cover shield 70 of the nearest panel 2 and may contribute to positioning the wind deflector in relation to the panel system.

Also visible in Fig. 24 is a side cover 33 covering the end of the panel system 3 and projecting over an upstand 6 of roof structure on which the panel system is mounted.

### Figs 25 and 26 - Installation of front cover

At the lower portion of the panel system 3 shown in Fig. 25, the fixed panel 1 at the end of the row is shown. A mounting bracket 62' is present to connect the fixed panel 1 to the supporting structure 6' at the bottom profile element 14. One or more corresponding mounting brackets may be present at other positions along the length of the bottom profile element 14. The side cover 33 is installed as indicated. The bottom flashing 72 is now connected to the bottom profile element 14 of the fixed panel 1.

Fig. 26 shows the installation of a cover shield 70 as the one in Fig. 17. As may be seen, the cover shield will cover the mounting brackets 62, when it has been installed. In this embodiment, the cover shield is made from sheet metal and provided with end caps 701, which close off the ends. Such end caps may be provided on all cover shields, i.e. at each panel of the panel system, or only at the ends of the panel system, in which case a continuous space extending over the entire width of the panel system may be present underneath the cover shields. This space may be used to accommodate wires, ventilation ducts or the like.

### Final remarks

The invention is not limited to the above described embodiments, and the drainage and sealing system can, of course, also be used for other types of structures than the shown panel system 3.

### List of reference numerals

- 1: fixed panel (first)
11 top profile element
12 side profile element
13 side profile element
14 bottom profile element
- 100: fixed panel (second)
111 top profile element
- 2: openable panel (first)
21 top profile element
22 side profile element
23 side profile element
24 bottom profile element
- 200: openable panel (second)
224 bottom profile element
- 3: panel system
- 4: drainage assembly
- 5: panelling element
- 6: supporting structure (vertical wall)
- 6': supporting structure (roof surface)
- 6": supporting structure (beam)
- 7: top flashing
- 7': top end flashing
- 8: installation profile (first embodiment)
80 main body
81 top leg
82 bottom leg
83 hook-shaped leg
84 hook-like portion of interior leg 89
85 flashing engagement portion
86 fastener / bolt
87 enlarged portion
87 a upper surface
88 hollow
88a wall
89 interior legs
- 9: installation profile (second embodiment)
- 9': installation profile (alternative embodiment, Fig. 19b)
90 main body
91 top leg
92 bottom leg
92a cut-out
93 panel facing recesses
94 hook-like portion of interior leg 99
95 accommodation recess
96 fastener / bolt
97 bottom extension element (second embodiment)
970 border section
971 gasket engagement flange
979 exterior legs
98 top extension element
980 border section
981 snap fit legs
982 top extension element recess
99 interior leg
- 10: profile member
18 cover portion
181 abutment surface
182 pointed end
183 indentations
18a bridging portion
19 support portion
191 abutment surface
192 pointed end
193 indentations
194 hollow
19a dripping nose
- 15: two-layer IGU
- 15': three-layer IGU
- 16: exterior pane sheet
- 16a: intermediate pane sheet
- 17: interior pane sheet
- 20: insulating member
20a projections
- 25: hinge
- 26: hinge journal part
26a barrel mounting
26b hinge pin
- 27: hinge panel flange
271 panel flange leg
272 edge (of panel flange leg)
- 28: hinge profile flange
281 profile flange leg
282 edge (of panel flange leg)
- 29: gasket bend
- 30: gasket tracks
- 31: third leg of top flashing gasket
- 311: gasket
- 312: gasket
- 313: sealing strip
- 314: sealing strip
- 32: hook-shaped element
32a base part
32b hook portion
32c first end
32d second end
- 33: side cover
- 34: top flashing gasket
- 35: tracks (for projections 20a)
- 36: outer top gasket
- 37: drainage list profile
- 38: first sealing lip
- 39: primary mounting sealing lip
- 40: second mounting sealing lip
- 41: base part of drainage list
- 42: secondary sealing lip
- 43: rounded projections
- 44: support element
44a flange portion of support element
44b support element leg
- 45: drain trench
- 46: fastener
- 48: bottom extension element / insulating profile (first embodiment)
481 gasket engagement flange
489 exterior legs
- 49: U-shaped portion
- 50: connecting element (first embodiment)
- 50': connecting element (second embodiment)
- 51: interspace
- 52: first leg of top gasket
- 53: design list
- 54: second leg of top gasket
- 55: shading
- 56: shading bracket
- 57: interior profile element plane
- 58: auxiliary rafter
- 59: connecting element
- 60: actuator
- 61: cross-bar
- 62: mounting bracket (side profile element)
- 62': mounting bracket (bottom profile element)
- 63': fitting
- 63": fitting
- 64: wind deflector
641 triangular opposing sides
642 rectangular top
643 rectangular bottom end side
644 flange
645 flange
646 flange
- 65: second drain trench
- 66": beam
- 67: plate portion
- 68: leg portion
68a arrow shaped peak
- 69: leg projections
- 70: cover shield
70a insulation foam member
701 end cap
- 71: sealant strip
- 72: bottom flashing
- 73: external sealant strip
73a base portion
73b flange portion
73c support member
- 74: drain holes
- 75: inner gasket
- 76: hook-like projection
- 77: wall surface of profile element
- 78: top gasket track
- 79a: side profile track
- 79b: wall profile track
- L: longitudinal direction
- A: axial direction
- H: height
- T: thickness
- Ht: total height
- Hc: hinge clearance

## Claims

1. A panel system (3) comprising a number of fixed panels (1) and a number of openable panels (2), each fixed panel (1) and each openable panel (2) comprising a frame structure composed of a set of profile elements (11, 12, 13, 14, 21, 22, 23, 24) encasing a panelling element (5; 15; 15'), said frame structure including one top profile element (11, 21) configured to be connected to a supporting structure by means of a mounting and hinge assembly of said panel system,
wherein the mounting and hinge assembly comprises an installation profile (9; 9') with a main body (90) having a first, interior end and a second, exterior end, and that at least one border section is provided in connection with at least one of the first, interior end and the second, exterior end of the main body (90),
wherein the installation profile (9; 9') comprises an extruded profile of a metallic material, and
**characterised in that** the border section in connection with the second, exterior, upper end of the main body (90) is formed by an exchangeable, separate extension element (98) of a thermal insulation material, which is connected to the main body (90).

2. A panel system (3) according to claim 1, wherein the installation profile (9; 9') is provided with a top leg (91) at the second, exterior end of the main body (90), the top leg (91) extending away from the top profile element (11, 21) of each fixed panel (1) and each openable panel (2), and wherein the top leg (91) includes engagement means for engagement with a top extension element (98).

3. A panel system (3) according to claim 2, wherein the top extension element (98) comprises two snap fit legs (981) for engagement with the top leg (91) of the installation profile and a top extension element recess (982).

4. A panel system (3) according to claim 1, 2 or 3, wherein the installation profile (9; 9') is provided with a bottom leg (92) at the first, interior end of the main body (90), the bottom leg (92) extending towards the top profile element (11, 21) of each fixed panel (1) and each openable panel (2), and wherein the bottom leg (92) includes engagement means for engagement with a bottom extension element (97).

5. A panel system (3) according to claim 4, wherein the engagement means comprise two interior legs (99) extending towards the interior, terminating in a respective hook-like portion (94) at the most interior end of each interior leg (99).

6. A panel system (3) according to claim 5, wherein the bottom extension element (97) comprises exterior legs (979) and a gasket engagement flange (971).

7. A panel system (3) according to claim 1, wherein the mounting and hinge assembly comprises a hinge (25) configured as a connection element between the installation profile (9; 9') and the top profile element (11, 21) of each fixed panel (1) and each openable panel (2).

8. A panel system (3) according to claim 7, wherein the hinge (25) comprises a hinge profile flange (28) configured to be connected to the installation profile (9; 9') and a hinge panel flange (27) configured to be connected to the top profile element (11, 21) of each fixed panel (1) and each openable panel (2).

9. A panel system (3) according to claim 8, wherein the hinge (25) comprises a hinge journal part (26) connected to the hinge profile flange (28) and the hinge panel flange (27), and wherein the hinge journal part (26) comprises a barrel mounting (26a) configured to receive a hinge pin (26b).

10. A panel system (3) according to claim 8 or 9, wherein the hinge panel flange (27) and the hinge profile flange (28) is each an elongated element, with a first flat side facing the top profile element (11, 21) and the installation profile (9; 9'), respectively, and a second side with a cut-out.

11. A panel system according to claim 10, wherein the hinge panel flange (27) has a panel flange leg (271) extending perpendicular to a major surface of the hinge panel flange (27) towards the hinge profile flange (28), said panel flange leg (271) terminating in an edge (272), and wherein the hinge profile flange (28) has a profile flange leg (281) extending perpendicular to a major surface of the hinge profile flange (28) towards the hinge panel flange (27), said profile flange leg (281) terminating in an edge (282), the edge (272) of the panel flange leg (271) being in contact with the edge (282) of the profile flange leg (281) in the closed position of the openable panel (2) of the panel system (3).

12. A panel system (3) according to claim 1, wherein the main body (90) of the installation profile (9; 9') is provided with a plurality of recesses for connection to the support structure and to each fixed panel (1) and each openable panel (2).

13. A panel system (3) according to claim 12, wherein the main body (90) of the installation profile (9; 9') comprises at least one panel facing recess (93) for receiving at least one fastener (96).

14. A panel system (3) according to claim 12 or 13, wherein the mounting and hinge arrangement comprises a support element (44) having at least one flange portion (44a).

15. A panel system (3) according to claim 14, wherein the flange portion (44a) of the support element (44) is connected to the main body (90) of the installation profile (9; 9'), wherein the main body (90) of the installation profile (9; 9') comprises an accommodation recess (95), and wherein the support element (44) comprises a support element leg (44b) configured to hook into the accommodation recess (95).

16. A panel system (3) according to claim 15, wherein the panel system comprises two opposing panels (1, 100) and the support element (44) has two flange portions (44a) and two support element legs (44b) connected to the installation profile (8) of the respective top profile element (11, 111).

17. A method of adapting a panel system (3) so that it results into a panel system (3) to any one of claims 1 to 16, comprising the steps of:
selecting desired thermal insulation properties of the panel system (3),
providing at least one extension element (97, 98) with suitable thermal insulation properties,
cutting off at least one border section from the main body (90), and
engaging the at least one extension element (97, 98) with the main body (90) of the installation profile.

## Patentansprüche

1. Paneelsystem (3), das eine Anzahl an feststehenden Paneelen (1) und eine Anzahl an öffenbaren Paneelen (2) umfasst, wobei jedes feststehende Paneel (1) und jedes öffenbare Paneel (2) eine Rahmenstruktur umfasst, die aus einem Satz von Profilelementen (11, 12, 13, 14, 21, 22, 23, 24) besteht, die ein Paneelelement (5; 15; 15') umschließen, wobei die Rahmenstruktur ein oberes Profilelement (11, 21) umfasst, das dazu ausgelegt ist, mittels einer Montage- und Scharnierbaugruppe des Paneelsystems mit einer Tragstruktur verbunden zu sein,
wobei die Montage- und Scharnierbaugruppe ein Installationsprofil (9; 9') mit einem Hauptkörper (90) umfasst, der ein erstes, inneres Ende und ein zweites, äußeres Ende aufweist, und mindestens ein Grenzbereich in Verbindung mit mindestens einem des ersten, inneren Endes und des zweiten, äußeren Endes des Hauptkörpers (90) bereitgestellt ist,
wobei das Installationsprofil (9; 9') ein extrudiertes Profil aus einem metallischen Material umfasst, und
**dadurch gekennzeichnet, dass** der Grenzbereich in Verbindung mit dem zweiten, äußeren, höheren Ende des Hauptkörpers (90) durch ein austauschbares, separates Verlängerungselement (98) aus einem Wärmedämmmaterial gebildet ist, das mit dem Hauptkörper (90) verbunden ist.

2. Paneelsystem (3) nach Anspruch 1, wobei das Installationsprofil (9; 9') mit einem oberen Schenkel (91) an dem zweiten, äußeren Ende des Hauptkörpers (90) versehen ist, wobei sich der obere Schenkel (91) von dem oberen Profilelement (11, 21) jedes feststehenden Paneels (1) und jedes öffenbaren Paneels (2) weg erstreckt, und wobei der obere Schenkel (91) Eingriffsmittel zum Eingriff mit einem oberen Verlängerungselement (98) umfasst.

3. Paneelsystem (3) nach Anspruch 2, wobei das obere Verlängerungselement (98) zwei Einrastschenkel (981) zum Eingriff mit dem oberen Schenkel (91) des Installationsprofils und einer oberen Verlängerungselementaussparung (982) umfasst.

4. Paneelsystem (3) nach Anspruch 1, 2 oder 3, wobei das Installationsprofil (9; 9') mit einem unteren Schenkel (92) an dem ersten, inneren Ende des Hauptkörpers (90) versehen ist, wobei sich der untere Schenkel (92) zu dem oberen Profilelement (11, 21) jedes feststehenden Paneels (1) und jedes öffenbaren Paneels (2) hin erstreckt, und wobei der untere Schenkel (92) Eingriffsmittel zum Eingriff mit einem unteren Verlängerungselement (97) umfasst.

5. Paneelsystem (3) nach Anspruch 4, wobei die Eingriffsmittel zwei innere Schenkel (99) umfassen, die sich zum Inneren hin erstrecken, die in einem jeweiligen hakenartigen Abschnitt (94) am innersten Ende jedes inneren Schenkels (99) enden.

6. Paneelsystem (3) nach Anspruch 5, wobei das untere Verlängerungselement (97) äußere Schenkel (979) und einen Dichtungseingriffsflansch (971) umfasst.

7. Paneelsystem (3) nach Anspruch 1, wobei die Montage- und Scharnierbaugruppe ein Scharnier (25) umfasst, das als ein Verbindungselement zwischen dem Installationsprofil (9; 9') und dem oberen Profilelement (11, 21) jedes feststehenden Paneels (1) und jedes öffenbaren Paneels (2) ausgelegt ist.

8. Paneelsystem (3) nach Anspruch 7, wobei das Scharnier (25) einen Scharnierprofilflansch (28), der dazu ausgelegt ist, mit dem Installationsprofil (9; 9') verbunden zu sein, und einen Scharnierpaneelflansch (27), der dazu ausgelegt ist, mit dem oberen Profilelement (11, 21) jedes feststehenden Paneels (1) und jedes öffenbaren Paneels (2) verbunden zu sein, umfasst.

9. Paneelsystem (3) nach Anspruch 8, wobei das Scharnier (25) einen Scharnierzapfenteil (26) umfasst, der mit dem Scharnierprofilflansch (28) und dem Scharnierpaneelflansch (27) verbunden ist, und wobei der Scharnierzapfenteil (26) eine Zylinderhalterung (26a) umfasst, die dazu ausgelegt ist, einen Scharnierstift (26b) aufzunehmen.

10. Paneelsystem (3) nach Anspruch 8 oder 9, wobei der Scharnierpaneelflansch (27) und der Scharnierprofilflansch (28) jeweils ein längliches Element mit einer ersten flachen Seite, die dem oberen Profilelement (11, 21) bzw. dem Installationsprofil (9; 9') zugewandt ist, und einer zweiten Seite mit einem Ausschnitt ist.

11. Paneelsystem nach Anspruch 10, wobei der Scharnierpaneelflansch (27) einen Paneelflanschschenkel (271) aufweist, der sich senkrecht zu einer Hauptfläche des Scharnierpaneelflanschs (27) zu dem Scharnierprofilflansch (28) hin erstreckt, wobei der Paneelflanschschenkel (271) in einer Kante (272) endet, und wobei der Scharnierprofilflansch (28) einen Profilflanschschenkel (281) aufweist, der sich senkrecht zu einer Hauptfläche des Scharnierprofilflanschs (28) zu dem Scharnierpaneelflansch (27) hin erstreckt, wobei der Profilflanschschenkel (281) in einer Kante (282) endet, wobei die Kante (272) des Paneelflanschschenkels (271) in der geschlossenen Position des öffenbaren Paneels (2) des Paneelsystems (3) mit der Kante (282) des Profilflanschschenkels (281) in Kontakt steht.

12. Paneelsystem (3) nach Anspruch 1, wobei der Hauptkörper (90) des Installationsprofils (9; 9') mit einer Mehrzahl von Aussparungen zur Verbindung mit der Tragstruktur und mit jedem feststehenden Paneel (1) und jedem öffenbaren Paneel (2) versehen ist.

13. Paneelsystem (3) nach Anspruch 12, wobei der Hauptkörper (90) des Installationsprofils (9; 9') mindestens eine dem Paneel zugewandte Aussparung (93) zum Aufnehmen mindestens eines Befestigungselements (96) umfasst.

14. Paneelsystem (3) nach Anspruch 12 oder 13, wobei die Montage- und Scharnieranordnung ein Tragelement (44) mit mindestens einem Flanschabschnitt (44a) umfasst.

15. Paneelsystem (3) nach Anspruch 14, wobei der Flanschabschnitt (44a) des Tragelements (44) mit dem Hauptkörper (90) des Installationsprofils (9; 9') verbunden ist, wobei der Hauptkörper (90) des Installationsprofils (9; 9') eine Aufnahmeaussparung (95) umfasst, und wobei das Tragelement (44) einen Tragelementschenkel (44b) umfasst, der dazu ausgelegt ist, in die Aufnahmeaussparung (95) einzuhaken.

16. Paneelsystem (3) nach Anspruch 15, wobei das Paneelsystem zwei gegenüberliegende Paneele (1, 100) umfasst und das Tragelement (44) zwei Flanschabschnitte (44a) und zwei Tragelementschenkel (44b) aufweist, die mit dem Installationsprofil (8) des jeweiligen oberen Profilelements (11, 111) verbunden sind.

17. Verfahren zum Anpassen eines Paneelsystems (3) derart, dass es in einem Paneelsystem (3) nach einem der Ansprüche 1 bis 16 resultiert, umfassend die folgenden Schritte:
Auswählen gewünschter Wärmedämmeigenschaften des Paneelsystems (3),
Bereitstellen mindestens eines Verlängerungselements (97, 98) mit geeigneten Wärmedämmeigenschaften,
Abschneiden mindestens eines Grenzbereichs von dem Hauptkörper (90), und
Ineingriffbringen des mindestens einen Verlängerungselements (97, 98) mit dem Hauptkörper (90) des Installationsprofils.

## Revendications

1. Système de panneaux (3) comprenant un nombre de panneaux fixes (1) et un nombre de panneaux ouvrables (2), chaque panneau fixe (1) et chaque panneau ouvrable (2) comprenant une structure cadre composée d'un jeu d'éléments profilés (11, 12, 13, 14, 21, 22, 23, 24) entourant un élément de panneau (5 ; 15 ; 15'), ladite structure cadre incluant un élément profilé supérieur (11, 21) configuré pour être relié à une structure de support au moyen d'un ensemble unité de montage et charnière dudit système de panneaux,
dans lequel l'ensemble unité de montage et charnière comprend un profilé d'installation (9 ; 9') avec un corps principal (90) ayant une première extrémité intérieure et une seconde extrémité extérieure, et au moins une section de bordure est prévue en association avec au moins une de la première extrémité intérieure et de la seconde extrémité extérieure du corps principal (90),
dans lequel le profilé d'installation (9 ; 9') comprend un profilé extrudé d'un matériau métallique, et
**caractérisé en ce que** la section de bordure en association avec la seconde extrémité supérieure extérieure du corps principal (90) est formée par un élément d'extension distinct échangeable (98) d'un matériau thermo-isolant, qui est relié au corps principal (90).

2. Système de panneaux (3) selon la revendication 1, dans lequel le profilé d'installation (9 ; 9') est pourvu d'un segment supérieur (91) à la seconde extrémité extérieure du corps principal (90), le segment supérieur (91) s'étendant à l'opposé de l'élément profilé supérieur (11, 21) de chaque panneau fixe (1) et chaque panneau ouvrable (2), et dans lequel le segment supérieur (91) inclut des moyens d'entrée en prise pour l'entrée en prise avec un élément d'extension supérieur (98).

3. Système de panneaux (3) selon la revendication 2, dans lequel l'élément d'extension supérieur (98) comprend deux segments à ajustement par encliquetage (981) pour l'entrée en prise avec le segment supérieur (91) du profilé d'installation et un évidement d'élément d'extension supérieur (982).

4. Système de panneaux (3) selon la revendication 1, 2 ou 3, dans lequel le profilé d'installation (9 ; 9') est pourvu d'un segment inférieur (92) à la première extrémité intérieure du corps principal (90), le segment inférieur (92) s'étendant vers l'élément profilé supérieur (11, 21) de chaque panneau fixe (1) et de chaque panneau ouvrable (2), et dans lequel le segment inférieur (92) inclut des moyens d'entrée en prise pour l'entrée en prise avec un élément d'extension inférieur (97).

5. Système de panneaux (3) selon la revendication 4, dans lequel les moyens d'entrée en prise comprennent deux segments intérieurs (99) s'étendant vers l'intérieur, se terminant en une portion de type crochet respective (94) à l'extrémité la plus intérieure de chaque segment intérieur (99).

6. Système de panneaux (3) selon la revendication 5, dans lequel l'élément d'extension inférieur (97) comprend des segments extérieurs (979) et une aile d'entrée en prise de joint d'étanchéité (971).

7. Système de panneaux (3) selon la revendication 1, dans lequel l'ensemble unité de montage et charnière comprend une charnière (25) configurée en tant qu'élément de liaison entre le profilé d'installation (9 ; 9') et l'élément profilé supérieur (11, 21) de chaque panneau fixe (1) et de chaque panneau ouvrable (2).

8. Système de panneaux (3) selon la revendication 7, dans lequel la charnière (25) comprend une aile de profilé de charnière (28) configurée pour être reliée au profilé d'installation (9 ; 9') et une aile de panneau de charnière (27) configurée pour être reliée à l'élément profilé supérieur (11, 21) de chaque panneau fixe (1) et chaque panneau ouvrable (2).

9. Système de panneaux (3) selon la revendication 8, dans lequel la charnière (25) comprend une partie tourillon de charnière (26) reliée à l'aile de profilé de charnière (28) et l'aile de panneau de charnière (27), et dans lequel la partie tourillon de charnière (26) comprend une unité de montage cylindrique (26a) configurée pour recevoir un axe de charnière (26b).

10. Système de panneaux (3) selon la revendication 8 ou 9, dans lequel l'aile de panneau de charnière (27) et l'aile de profilé de charnière (28) sont chacune un élément allongé, avec un premier côté plat faisant face à l'élément profilé supérieur (11, 21) et au profilé d'installation (9 ; 9'), respectivement, et un second côté avec une découpe.

11. Système de panneaux selon la revendication 10, dans lequel l'aile de panneau de charnière (27) a un segment d'aile de panneau (271) s'étendant perpendiculairement à une surface majeure de l'aile de panneau de charnière (27) vers l'aile de profilé de charnière (28), ledit segment d'aile de panneau (271) se terminant en un bord (272), et dans lequel l'aile de profilé de charnière (28) a un segment d'aile de profilé (281) s'étendant perpendiculairement à une surface majeure de l'aile de profilé de charnière (28) vers l'aile de panneau de charnière (27), ledit segment d'aile de profilé (281) se terminant en un bord (282), le bord (272) du segment d'aile de panneau (271) étant en contact avec le bord (282) du segment d'aile de profilé (281) dans la position fermée du panneau ouvrable (2) du système de panneaux (3).

12. Système de panneaux (3) selon la revendication 1, dans lequel le corps principal (90) du profilé d'installation (9 ; 9') est pourvu d'une pluralité d'évidements pour la liaison à la structure de support et à chaque panneau fixe (1) et chaque panneau ouvrable (2).

13. Système de panneaux (3) selon la revendication 12, dans lequel le corps principal (90) du profilé d'installation (9 ; 9') comprend au moins un évidement faisant face à panneau (93) pour recevoir au moins une pièce de fixation (96).

14. Système de panneaux (3) selon la revendication 12 ou 13, dans lequel l'agencement unité de montage et charnière comprend un élément de support (44) ayant au moins une portion aile (44a).

15. Système de panneaux (3) selon la revendication 14, dans lequel la portion aile (44a) de l'élément de support (44) est reliée au corps principal (90) du profilé d'installation (9 ; 9'), dans lequel le corps principal (90) du profilé d'installation (9 ; 9') comprend un évidement de logement (95), et dans lequel l'élément de support (44) comprend un segment d'élément de support (44b) configuré pour s'accrocher dans l'évidement de logement (95).

16. Système de panneaux (3) selon la revendication 15, dans lequel le système de panneaux comprend deux panneaux opposés (1, 100) et l'élément de support (44) a deux portions ailes (44a) et deux segments d'élément de support (44b) reliés au profilé d'installation (8) de l'élément profilé supérieur respectif (11, 111).

17. Procédé d'adaptation d'une système de panneaux (3) pour qu'il ait pour résultat un système de panneaux (3) de l'une quelconque des revendications 1 à 16, comprenant les étapes de :
la sélection de propriétés d'isolation thermique souhaitées du système de panneaux (3),
la fourniture d'au moins un élément d'extension (97, 98) avec des propriétés d'isolation thermique appropriées,
la découpe d'au moins une section de bordure à partir du corps principal (90), et
la mise en prise de l'au moins un élément d'extension (97, 98) avec le corps principal (90) du profilé d'installation.
